# EUROPÄISCHE PATENTSCHRIFT

(11) **EP 0 878 689 B1**
(45) Veröffentlichungstag und Bekanntmachung des Hinweises auf die Patenterteilung: **22.11.2000**
(21) Anmeldenummer: 98108599.6
(22) Anmeldetag: 12.05.1998
(51) Int. Cl.: G01B 3/06, G01B 3/00, B29C 45/16

(54) **Spritz Herstellungen eines Gliedermasstabs und Längsverstärkung**
Injection manufacturing of a folding rule and longitudinal reinforcement
Fabrications par injection d'un mètre pliant et renforcement longitudinal

(30) Priorität: 16.05.1997 DE 19720486
(43) Veröffentlichungstag der Anmeldung: 18.11.1998
(73) Patentinhaber: BAYERISCHE MASS-INDUSTRIE ARNO KELLER GMBH, 91217 Hersbruck (DE)
(72) Erfinder: Keller, Hans, 91217 Hersbruck (DE); Dengler, Herbert, 91217 Hersbruck (DE)
(74) Vertreter: Götz, Georg, Dipl.-Ing.

(56) Entgegenhaltungen:
- DE-C- 4 442 875
- GB-A- 1 139 020
- US-A- 3 934 352
- US-A- 5 461 795

## Beschreibung

Die Erfindung betrifft Herstellungsverfahren eines Gliedermaßstabs aus Kunststoff und einen derartigen Gliedermaßstab.

Bei Gliedermaßstäbe nach der Patentschrift DE 44 42 875 C1 bewirkt die mit der steiferen, härteren Materialkomponente gebildete Innenschicht bzw. "Seele" bereits eine erhöhte Biegefestigkeit bezüglich einer Achse, die in bzw. parallel zur Breitseitenebene des Gliederstabs und quer zu dessen Längsrichtung verläuft Zur weiteren Erhöhung dieser Biegesteifigkeit, ohne dabei die äußere flache Form oder das Gewicht des Gliedermaßstabs zu verändern kann die innere, härtere und/oder weniger elastische Materialkomponente in dem Bereich oder auf der oder den Seiten, die der oder den Breitseiten-Oberflächen des Gliederstabs zugewandt sind, eine oder mehrere Erhöhungen oder sonstige Erhebungen aufzubringen, die sich in Richtung zu den Breitseiten erstrecken. Damit wird von der Gesetzmäßigkeit Gebrauch gemacht, daß das Biegewiderstandsmoment mit der senkrecht zur Biegeachse gemessenen Höhe exponentiell zunimmt. Deshalb sind die Erhöhungen oder sonstigen Erhebungen auf der inneren, härteren und/oder weniger elastischen Materialkomponente zu den äußeren Breitseiten des Gliederstabs hin ausgerichtet. Denn die kritische Biegeachse verläuft bei Gliedermaßstäben parallel zu deren Breitseiten und natürlich quer zu deren Längsrichtung.

Auf Gliedermaßstäben sind gewöhnlich Informationen, beispielsweise Teilungsstriche, Ziffern oder sonstige Muster, Markierungen oder textliche oder figürliche Darstellungen aufgebracht. Nach dem eingangs genannten, gattungsgemäßen Stand der Technik DE 44-42 875 C1 ist die äußere, die innere umgebende Materialkomponente innerhalb von einer oder mehreren Konturen, die durch die wiederzugebende Information vorgegeben sind, so ausgespart bzw. weggelassen oder zumindest so transparent aufgebracht, daß die innere von der äußeren umgebenen Materialkomponente in diesen Bereichen bzw. Aussparungen sichtbar ist. Eine, mehreren oder alle Erhöhungen der inneren, von der äußeren umgebenen Materialkomponente können sich in diese Bereiche oder Aussparungen erstrecken und dabei zur Wiedergabe der Teilung beispielsweise sichtbar sein. Damit wird der Vorteil erzielt, daß die Erhebungen neben der Erhöhung der Biegesteifigkeit bzw. des Biegewiderstandsmomentes auch, noch die Funktion der Informations-, insbesondere Teilungswiedergabe erfüllen. Dies läßt sich noch dadurch weiter fördern, daß die beiden Materialkomponenten zueinander farblich kontrastieren.

Um die Erhebungen auf der der Gliederstab-Breitseite zugewandten Oberseite der härteren, inneren Materialkomponentenschicht in einfacher und kostengünstiger Weise bilden zu konnen, wird erfindungsgemäß eine weitere Maßnahme vorgeschlagen, bei der die beiden gegenüberliegenden Teile des Formbehältnisses so weit voneinander wegbewegt werden, daß die diskreten Innenwandungs-Vorsprünge Aussparungen, die von innen gebildet sind, in der äußeren Materialkomponente zumindest teilweise freigeben und am äußeren Ende verschließen; ferner wird erfindungsgemäß die weitere Maßnahme vorgeschlagen, in den Hohlraum weiter die innere Materialkomponente einzudrücken, bis diese in die (freigegebenen) Aussparungen gelangt und diese ganz oder teilweise ausfüllt. Alternativ dazu wird nach der Erfindung als weitere Maßnahme vorgeschlagen, die Formbehältnis-Teile mit den Vorsprüngen an der Innenwandung durch andere Formbehältnis-Teile ohne Vorsprünge an der Innenwandung zu ersetzen und mit diesen Ersatz-Teilen Aussparungen, die von den Vorsprüngen der anderen Formbehältnis-Teile gebildet sind, in der äußeren Materialkomponente zu verschließen; als weitere Maßnahme gehört zu dieser Erfindungsalternative, daß in den Hohlraum weiter die innere Materialkomponente eingedrückt wird, bis diese in die Aussparungen gelangt und diese ganz oder teilweise ausfüllt.

Mit beiden alternativen Herstellungsverfahren nach der Erfindung läßt sich das oben genannte Ziel erreichen, die Erhebungen nicht nur zur Erhöhung des Widerstandsmoments, sondern auch als Erzeuger und Träger von visuell erfaßbaren Informationen einzusetzen. Denn nach der erstgenannten Verfahrensalternative sind die vorzugsweise farblich kontrastierenden, härteren Materialbestandteile zumindest in den Aussparungen gut sichtbar; nach der zweitgenannten Alternative enden die Erhebungen von der inneren, härteren Materialkomponente nahezu bündig bzw. auf gleichem Niveau wie die Breiteseiten-Oberfläche der äußeren, weicheren Materialkomponente.

Der erfindungsgemäße Gliedermaßstab weist eine mittige Erhebung auf, die sich über die gesamte Länge erstreckt.

Weitere Einzelheiten, Vorteile und Merkmale auf der Basis der Erfindung ergeben sich aus der nachfolgenden Beschreibung bevorzugter Ausführungsbeispiele der Erfindung und den Zeichnungen. Diese zeigen in:
- Fig. 1: eine schematische Draufsicht auf die Breitseite eines abgebrochen gezeichneten Abschnitts eines einzelnen Kunststoff-Gliederstabes gemäß Erfindung,
- Fig. 2A-D: unterschiedliche Spritzgußherstellungsphasen des Gliederstabes im Schnitt gemäß Linie II - II in Fig. 1 unter Verwendung eines Spritzgußwerkzeuges,
- Fig.3: in entsprechender Schnittansicht eine alternative, erfindungsgemäße Herstellungsmaßnahme.

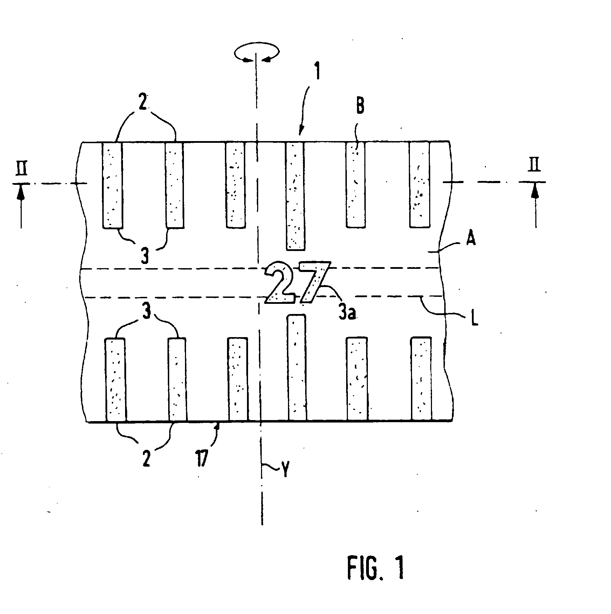

Gemäß Fig. 1 ist der abschnittsweise dargestellte Gliederstab 1 auf seiner Oberfläche mit einer Außenhaut aus einer Kunststoff-Materialkomponente A versehen, die sich durch besondere "weiche" bzw. elastische Eigenschaften auszeichnet. Diese Außenhaut A ist unterbrochen durch eine Strichteilung, die durch einzelne, parallele und in Längsrichtung nebeneinander gereihte Teilungsaussparungen 2 gebildet ist, indem innerhalb der Aussparungskonturen 3 die weiche Materialkomponente bzw. Außenhaut A weggelassen ist. Stattdessen steht die zweite, darunter befindliche Kunststoff-Materialkomponente B, die sich durch Eigenschaften wie besondere Steifigkeit, Härte, Festigkeit und geringe Elastizität auszeichnet, in der Teilungsaussparung 2 erhaben und sichtbar zur Breitseite vor. Im gezeichneten Beispiel besitzen die Aussparungskonturen eine rechteckige Form. Zusätzlich kann der Gliederstab 1 auf seiner Oberfläche noch eine Markierungsziffer "27" oder dergleichen aufweisen, die ebenfalls in entsprechenden Aussparungskonturen 3a durch Erhebungen der farblich kontrastierenden, härteren Materialkomponete B dagestellt wird.

Mittels der diskreten Erhebungen der inneren, härteren Kunststoffmaterialkomponente B wird deren Höhenerstreckung quer zur Breitseite bzw. zur Biegeachse Y vergrößert, was eine Verstärkung des Biegewiderstandsmomentes um diese Biegeachse Y mit sich bringt. Dem kann zusätzlich noch ein mittig angeordneter (gestrichelt gezeichneter) Längssteg L dienen, der sich auf der Oberseite der inneren, härteren Materialkomponente in Gliederstab-Längsrichtung erstreckt und durch die weichere Außenhaut bzw. Materialkomponente A umgeben und für das Auge verdeckt sein kann. Aus designerisch-optischen Gründen kann dieser Längssteg L auch durch entsprechende Aussparungskonturen in der Außenhaut A für das Auge freigelegt sein.

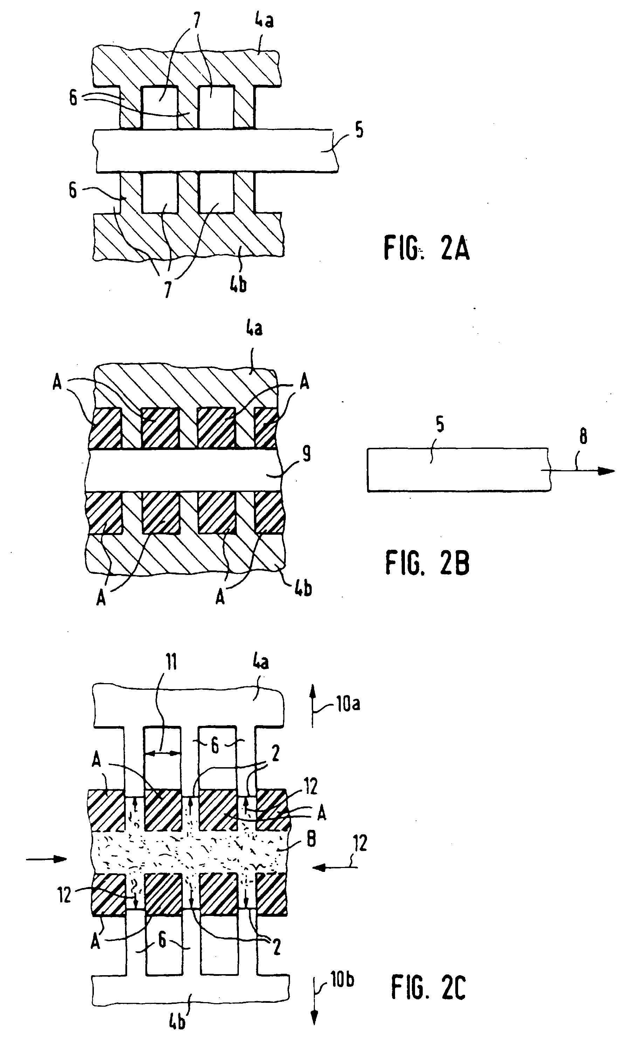

Gemäß Fig. 2A dient zur Herstellung ein Spritzguß-Werkzeug mit einem zweiteiligen Formbehältnis 4a, 4b sowie einem Schiebekern 5. Letzterer ist in das Formbehältnis 4a, 4b einfahrbar, wie in der Stellung in Fig. 2A gezeigt, sowie herausfahrbar (vgl. Fig. 2B, 2C). Die Formbehältnisteile bzw. -hälften 4a, 4b besitzen an ihrer Innenwandung Vorsprünge 6, welche in Kontur und Abstand 11 den Teilungsaussparungen 2 für die Strichteilung des Gliedermaßstabs gemäß Fig. 1 entsprechen. Der Schiebekern 5 ist zwischen den beiden Formbehältnisteilen 4a, 4b eingefahren, wobei letztere mit ihren Vorsprüngen 6 auf den Längsseiten des Schiebekerns 5 aufliegen und dabei diskrete Zwischenräume 7 voneinander abgrenzen, die gemeinsam von den Formbehältnishälften 4a, 4b und dem Schiebekern 5 zwischen den Vorsprüngen 6 gebildet werden. Bei dieser Stellung wird in der ersten Herstellungsphase die weichere Außenhaut-Materialkomponente A in die Zwischenräume 7 eingespritzt.

In der zweiten Herstellungsphase gem. Fig. 2B wird der Schiebekern 5 gem. Auszugs-Bewegungsrichtung 8 herausgezogen, wobei ein entsprechender Hohlraum 9 verbleibt, der sogleich mit härterer Materialkomponente B ausgefüllt wird, bevor die vorher in die Zwischenräume 7 eingespritzte weichere Materialkomponente A erkaltet ist. Damit ist sichergestellt, daß eine ausreichende Verbindungsfestigkeit zwischen den beiden Komponenten A und B erzielt wird.

Gemäß Fig. 2C wird in einer dritten Herstellungsphase das Formbehältnis teilweise aufgefahren, in dem dessen beiden Hälften 4a, 4b eine jeweils entgegengesetzte Bewegungsrichtung 10a, 10b erteilt wird. Diese Bewegungsrichtungen 10a, 10b werden so begrenzt, daß die Zwischenräume 7 von den Vorsprüngen 6 nur teilweise freigegeben werden. Ferner wird auf die sich bereits im Hohlraum 9 befindliche, härtere Materialkomponente B weiter Druck 12 ausgeübt, wodurch die härtere Materialkomponente B in die Zwischenräume 7 bis zu den stirnseitigen Enden der Vorsprünge 6 des Formbehältnisses bewegt wird.

Gemäß Fig. 2D wird nun das Formbehältnis vollständig geöffnet, so daß auch die in die Zwischenräume 9 eingeflossenen Erhebungen 13 stirnseitig freigelegt sind. Im weiteren erkalten die nunmehr unlösbar miteinander verbundenen Materialkomponenten - Außenhaut A und versteifende Innenseele B -. Dabei ergibt sich eine Erstarrung derart, daß die noch freien Bereiche 14 unmittelbar oberhalb der freien Stirnenden der Erhebungen 13 stabil als Teilungsaussparungen 2 für die Strichteilung auf dem Gliederstab 1 erhalten bleiben. Gleichzeitig ergibt sich eine Versteifung der weicheren Materialkomponente bzw. Außenhaut durch die innere Materialkomponente B als "Seele" des Einzel-Gliederstabes 1 mit erhöhtem Biegewiderstandsmoment aufgrund der Erhebungen 13.

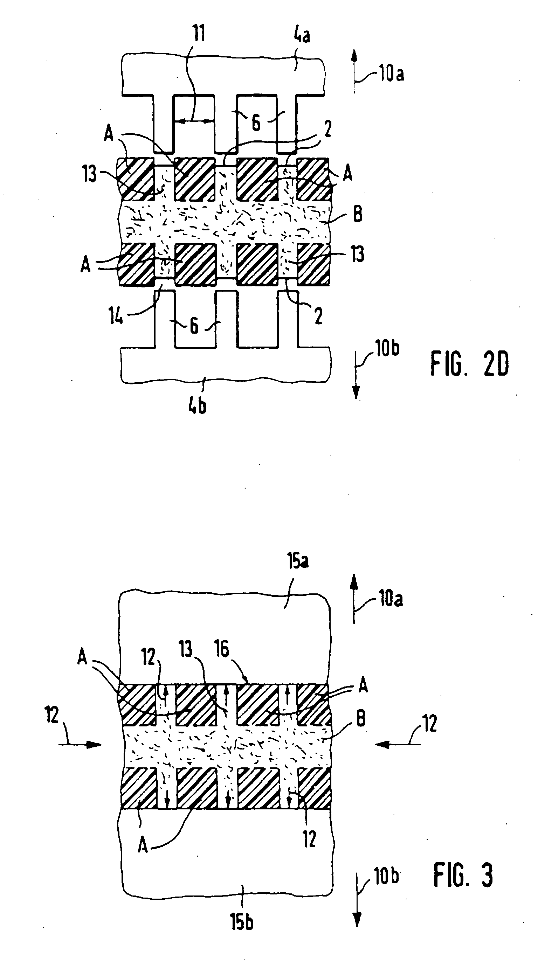

Gemäß Fig. 3 sind bei einer alternativen Herstellungsmethodik die beiden Vorsprung-Hälften 4a, 4b des zweiteiligen Formbehältnisses durch Hälften 15a, 15b, die ohne die oben genannten Vorsprünge ausgebildet sind, für obige dritte Herstellungsphase nach Fig. 2C ersetzt. Wird analog dieser oben erörterten, dritten Herstellungsphase nach Ausfüllen des Hohlraumes 9 weiterhin Druck 12 auf die härtere, innere Materialkomponente B ausgeübt, fließt diese soweit in die Zwischenräume 7, bis deren Fluß durch die jeweils angrenzende Ersatz-Formbehältnis-Hälfte 15a , 15b begrenzt bzw. gestoppt wird. Die oben genannten, freien Bereiche 14 können dabei nicht mehr entstehen. Die Erhebungen 13 aus der inneren, härteren Materialkomponente B schließen bündig mit der Endkante des jeweiligen Zwischenraumes 7 bzw. der Oberfläche der Breitseite 16 des Gliedermaßstabes ab. Die Schmalseite 17 (vgl. Fig. 1) verläuft in Fig. 3 - ebenso wie in Figuren 2A - 2D - parallel zur Zeichenebene.

## Patentansprüche

1. Verfahren zur Herstellung eines Gliedermaßstabs aus Kunststoff mit einzelnen Gliederstäben (1), die drehgelenkig aneinandergereiht sind und gegenüberliegende äußere Breit- und Schmalseiten (16,17) aufweisen, wobei zur Bildung des einzelnen Gliederstabs (1) wenigstens zwei Kunststoff-Materialkomponenten (A,B) unterschiedlicher Härte und/oder Elastizität verwendet werden, und die härtere und/oder weniger elastische Materialkomponente (B) mit der elastischeren und/oder weicheren Materialkomponente (A) ganz oder teilweise umgeben wird, mit einer ersten Maßnahme, bei der in ein Formbehältnis (4) aus zwei Teilen (4a,4b) mit einer Reihe diskreter Vorsprünge (6) an deren gegenüberliegenden Innenwandungen die äußere Materialkomponente (A) eingespritzt und umfaßt und mit einer dem einzelnen Gliederstab (1) entsprechenden äußeren Form gestaltet wird, wobei mittels eines in das Formbehältnis (4) bewegbaren Schiebekörpers (5) in der äußeren Materialkomponente (A) ein Hohlraum (9) für die darin zu umgebende innere Materialkomponente (B) gebildet wird, mit einer zweiten Maßnahme, bei der der Schiebekörper (5) herausgezogen und dann der Hohlraum (9) mit der inneren Materialkomponente (B) ausgefüllt wird, **gekennzeichnet durch** eine dritte Maßnahme, bei der die beiden Teile (4a,4b) des Formbehältnisses soweit voneinander wegbewegt werden, daß die diskreten Innenwandungs-Vorsprünge (6) von ihnen gebildete Aussparungen (2) in der äußeren Materialkomponente (A) zumindest teilweise freigeben und am äußeren Ende verschließen, und durch eine vierte Maßnahme, bei der in den Hohlraum (9) weiter die innere Materialkomponente (B) eingedrückt (12) wird, bis diese in die Aussparungen (2) gelangt und diese ganz oder teilweise ausfüllt, so dass die härtere und/oder weniger elastische Materialkomponente (B) in dem Bereich oder auf der oder den Seiten, die der oder den Breitseiten (16) des Gliederstabs (1) zugewandt sind, eine oder mehrere Erhöhungen oder sonstige Erhebungen (L,13) in Richtung zu den Breitseiten (16) aufweist.

2. Verfahren zur Herstellung eines Gliedermaßstabs aus Kunststoff mit einzelnen Gliederstäben (1), die drehgelenkig aneinandergereiht sind und gegenüberliegende äußere Breit- und Schmalseiten (16,17) aufweisen, wobei zur Bildung des einzelnen Gliederstabs (1) wenigstens zwei Kunststoff-Materialkomponenten (A,B) unterschiedlicher Härte und/oder Elastizität verwendet werden, und die härtere und/oder weniger elastische Materialkomponente (B) mit der elastischeren und/oder weicheren Materialkomponente (A) ganz oder teilweise umgeben wird, mit einer ersten Maßnahme, bei der in ein Formbehältnis (4) aus zwei Teilen (4a,4b) mit einer Reihe diskreter Vorsprünge (6) an deren gegenüberliegenden Innenwandungen die äußere Materialkomponente (A) eingespritzt und umfaßt und mit einer dem einzelnen Gliederstab (1) entsprechenden äußeren Form gestaltet wird, wobei mittels eines in das Formbehältnis (4) bewegbaren Schiebekörpers (5) in der äußeren Materialkomponente (A) ein Hohlraum (9) für die darin zu umgebende innere Materialkomponente (B) gebildet wird, mit einer zweiten Maßnahme, bei der der Schiebekörper (5) herausgezogen und dann der Hohlraum (9) mit der inneren Materialkomponente (B) ausgefüllt wird, **gekennzeichnet durch** eine dritte Maßnahme, bei der die FormbehältnisTeile (4a,4b) mit den Vorsprüngen (6) an der Innenwandung durch Formbehältnis-Teile (15a,15b) ohne Vorsprünge an der Innenwandung ersetzt werden, und mit diesen Ersatz-Teilen (15a,15b) von. den Vorsprüngen (6) gebildete Aussparungen (2) in der äußeren Materialkomponente (A) verschlossen werden; und durch eine vierte Maßnahme, bei der in den Hohlraum (9) weiter die innere Materialkomponente (B) eingedrückt (12) wird, bis diese in die Aussparungen (2) gelangt und diese ganz oder teilweise ausfüllt, so dass die härtere und/oder weniger elastische Materialkomponente (B) in dem Bereich oder auf der oder den Seiten, die der oder den Breitseiten (16) des Gliederstabs (1) zugewandt sind, eine oder mehrere Erhöhungen oder sonstige Erhebungen (L,13) in Richtung zu den Breitseiten (16) aufweist.

3. Gliedermaßstab, hergestellt mit dem Verfahren nach einem der vorangehenden Ansprüche, mit einzelnen Gliederstäben (1), die drehgelenkig aneinandergereiht sind und gegenüberliegende äußere Breit- und Schmalseiten (16,17) aufweisen, wobei zur Bildung des einzelnen Gliederstabs (1) wenigstens zwei Kunststoff-Materialkomponenten (A,B) unterschiedlicher Härte und/oder Elastizität verwendet sind, und die härtere und/oder weniger elastische Materialkomponente (B) von der elastischeren und/oder weicheren Materialkomponente (A) ganz oder teilweise umgeben ist, dadurch **gekennzeichnet, daß** die härtere und/oder weniger elastische Materialkomponente (B) in dem Bereich oder auf der oder den Seiten, die der oder den Breitseiten (16) des Gliederstabs (1) zugewandt sind, eine oder mehrere Erhöhungen oder sonstige Erhebungen (L,13) in Richtung zu den Breitseiten (16) aufweist, und wenigstens eine (L) der Erhebungen (L,13) auf dem Gliederstab (1) mittig angeordnet ist und sich über die gesamte Länge des Gliederstabs (1) erstreckt.

## Claims

1. Method of manufacturing a folding plastics rule with individual members (1), which are coupled together with hinges and have opposing external wide and narrow sides (16, 17), wherein in order to form the individual member (1) at least two plastics material components (A, B) of different hardnesses and/or resiliences are used, and the harder and/or less resilient material component (B) is surrounded, entirely or in part, by the more resilient and/or softer material component (A), comprising a first step in which the outer material component (A) is injected into and contained in a moulding container (4) consisting of two parts (4a, 4b) with a series of discreet projections (6) on its opposing inner walls and is formed with an outer form corresponding to the individual member (1), wherein by means of a sliding body (5) movable into the moulding container (4) a cavity (9) is formed in the outer material component (A) for the inner material component (B) to be surrounded therein, and comprising a second step in which the sliding body (5) is withdrawn and then the cavity (9) is filled with the inner material component (B), characterised by a third step, in which the two parts (4a, 4b) of the moulding container are moved sufficiently far apart that the discreet inner-wall projections (6) at least partly expose and at the outer end close recesses (2) formed by them in the outer material component (A) and by a fourth step in which the inner material component (B) is pressed further (12) into the cavity (9) until it passes into the recesses (2) and entirely or partly fills the same, so-that the harder and/or less resilient material component (B) has, in the region or on the side(s) facing the wide side(s) (16) of the member (1), one or more elevations or other prominences (L, 13) in the ion of the wide sides (16).

2. Method of manufacturing a folding plastics rule with individual members (1), which are coupled together with hinges and have opposing external wide and narrow sides (16, 17), wherein in order to form the individual member (1) at least two plastics material components (A, B) of different hardnesses and/or resiliences are used, and the harder and/or less resilient material component (B) is surrounded, entirely or in part, by the more resilient and/or softer material component (A), comprising a first step in which the outer material component (A) is injected into and contained in a moulding container (4) consisting of two parts (4a, 4b) with a series of discreet projections (6) on its opposing inner walls and is formed with an outer form corresponding to the individual member (1), wherein by means of a sliding body (5) movable into the moulding container (4) a cavity (9) is formed in the outer material component (A) for the inner material component (B) to be surrounded therein, and comprising a second step in which the sliding body (5) is withdrawn and then the cavity (9) is filled with the inner material component (B), characterised by a third step in which the moulding container parts (4a, 4b) with the projections (6) on the inner wall are replaced by moulding container parts (15a, 15b) without projections on the inner wall, and with these replacement parts (15a, 15b), recesses (2) formed by the projections (6) in the outer material component (A) are closed, and by a fourth step in which the inner material component (B) is pressed further (12) into the cavity (9) until it passes into the recesses (2) and fills these entirely or in part, so that the harder and/or less resilient material component (B) in the region or on the side(s) facing the wide side(s) (16) of the member (1) has one or more elevations or other prominences (L, 13) in the direction of the wide sides (16).

3. Folding rule, manufactured with the method according to one of the preceding claims, having individual members (1), which are coupled together with hinges and have opposing external wide and narrow sides (16,17), wherein in order to form the individual member (1) at least two plastics material components (A, B) of different hardnesses and/or resiliences are used, and the harder and/or less resilient material component (B) is surrounded by, entirely or in part, by the more resilient and/or softer material component (A), characterised in that the harder and/or less resilient material component (B) has in the region or on the side(s) facing the wide side(s) (16) of the member (1), one or more elevations or other prominences (L, 13) in the direction of the wide sides (16), and at least one (L) of the prominences (L, 13) is disposed centrally on the member (1) and extends over the entire length of the member (1).

## Revendications

1. Procédé de fabrication d'un mètre pliant en matière plastique comportant des branches individuelles (1), qui sont assemblées les unes aux autres en série, de manière articulée en rotation, et présentent des faces extérieures opposées larges et étroites (16, 17), la réalisation de la branche individuelle (1) utilisant au moins deux composants de matière plastique (A, B) de dureté et/ou d'élasticité différentes, et le composant de matière (B) le plus dur et/ou moins élastique étant entouré en totalité ou partiellement par le composant de matière (A) plus élastique et/ou plus mou, le procédé incluant une première mesure selon laquelle, dans un contenant formant moule (4) en deux parties (4a, 4b) avec une rangée de protubérances discrètes (6) sur leurs parois intérieures opposées, est injecté le composant de matière (A) extérieur qui est entouré par ces parties lui conférant la forme extérieure correspondant à la branche individuelle (1), une cavité (9) pour le composant de matière (B) intérieur, qui doit y être entouré, étant formée dans le composant de matière (A) extérieur au moyen d'un corps coulissant qui peut être introduit dans le contenant formant moule (4), le procédé incluant une deuxième mesure selon laquelle le corps coulissant (5) est retiré et la cavité (9) est ensuite remplie par le composant de matière (B) intérieur, caractérisé par une troisième mesure selon laquelle les deux parties (4a, 4b) du contenant formant moule sont écartées l'une de l'autre de façon telle que les protubérances discrètes (6) des parois intérieures libèrent au moins partiellement dans le composant de matière (A) extérieur, des évidements (2) qu'elles forment, et les ferment à l'extrémité extérieure, et par une quatrième mesure selon laquelle on poursuit l'injection (12) du composant de matière (B) intérieur jusqu'à ce que celui-ci parvienne dans les évidements (2) et remplisse ceux-ci totalement ou partiellement, de sorte que le composant de matière (B) plus dur et/ou moins élastique présente, dans la zone ou sur le ou les côtés dirigés vers la ou les faces larges (16) de la branche (1), une ou plusieurs bosses ou autres proéminences (L, 13) en direction des faces larges (16).

2. Procédé de fabrication d'un mètre pliant en matière plastique comportant des branches individuelles (1), qui sont assemblées les unes aux autres en série, de manière articulée en rotation, et présentent des faces extérieures opposées larges et étroites (16, 17), la réalisation de la branche individuelle (1) utilisant au moins deux composants de matière plastique (A, B) de dureté et/ou d'élasticité différentes, et le composant de matière (B) le plus dur et/ou moins élastique étant entouré en totalité ou partiellement par le composant de matière (A) plus élastique et/ou plus mou, le procédé incluant une première mesure selon laquelle, dans un contenant formant moule (4) en deux parties (4a, 4b) avec une rangée de protubérances discrètes (6) sur leurs parois intérieures opposées, est injecté le composant de matière (A) extérieur qui est entouré par ces parties lui conférant la forme extérieure correspondant à la branche individuelle (1), une cavité (9) pour le composant de matière (B) intérieur, qui doit y être entouré, étant formée dans le composant de matière (A) extérieur au moyen d'un corps coulissant qui peut être déplacé dans le contenant formant moule (4), le procédé incluant une deuxième mesure selon laquelle le corps coulissant (5) est retiré et la cavité (9) est ensuite remplie par le composant de matière (B) intérieur, caractérisé par une troisième mesure selon laquelle les parties (4a, 4b) du contenant formant moule comportant les protubérances (6) sur la paroi intérieure, sont remplacées par des parties (15a, 15b) de contenant formant moule sans protubérances sur la paroi intérieure, et ces parties de remplacement (15a, 15b) obturant des évidements (2) formés par les protubérances (6) dans le composant de matière (A) extérieur, et par une quatrième mesure selon laquelle on poursuit l'injection (12) du composant de matière (B) intérieur jusqu'à ce que celui-ci parvienne dans les évidements (2) et remplisse ceux-ci totalement ou partiellement, de sorte que le composant de matière (B) plus dur et/ou moins élastique présente, dans la zone ou sur le ou les côtés dirigés vers la ou les faces larges (16) de la branche (1), une ou plusieurs bosses ou autres proéminences (L, 13) en direction des faces larges (16).

3. Mètre pliant fabriqué par le procédé selon l'une des revendications précédentes, comprenant des branches individuelles (1), qui sont assemblées les unes aux autres en série, de manière articulée en rotation, et présentent des faces extérieures opposées larges et étroites (16, 17), la réalisation de la branche individuelle (1) utilisant au moins deux composants de matière plastique (A, B) de dureté et/ou d'élasticité différentes, et le composant de matière (B) le plus dur et/ou moins élastique étant entouré en totalité ou partiellement par le composant de matière (A) plus élastique et/ou plus mou, caractérisé en ce que le composant de matière (B) le plus dur et/ou moins élastique présente, dans la zone ou sur le ou les côtés dirigés vers la ou les faces larges (16) de la branche (1), une ou plusieurs bosses ou autres proéminences (L, 13) en direction des faces larges (16), et l'une (L) au moins des proéminences (L, 13) est disposée de manière centrée sur la branche (1) et s'étend sur toute la longueur de la branche (1).
